# EUROPÄISCHE PATENTSCHRIFT

(11) **EP 3 580 487 B1**
(45) Veröffentlichungstag und Bekanntmachung des Hinweises auf die Patenterteilung: **31.03.2021**
(21) Anmeldenummer: 18712426.8
(22) Anmeldetag: 12.02.2018
(51) Int. Cl.: F16L 37/088, B21D 39/04, F02M 35/10, F16L 13/14, F16L 33/213

(54) **STECKERBAUGRUPPE ZUR VERWENDUNG IN EINEM FAHRZEUG**
PLUG ASSEMBLY FOR USE IN A VEHICLE
MODULE CONNECTEUR DESTINÉ À ÊTRE UTILISÉ DANS UN VÉHICULE

(30) Priorität: 13.02.2017 AT 501152017
(43) Veröffentlichungstag der Anmeldung: 18.12.2019
(73) Patentinhaber: Henn GmbH & Co KG., 6850 Dornbirn (AT)
(72) Erfinder: RIST, Marvin, 6921 Kennelbach (AT)
(74) Vertreter: Burger, Hannes
(86) Internationale Anmeldenummer: PCT/AT2018/060041
(87) Internationale Veröffentlichungsnummer: WO 2018/145139

(56) Entgegenhaltungen:
- WO-A1-2015/161333
- AT-A4- 516 939
- AT-B1- 509 196
- US-A- 5 148 836

## Beschreibung

Die Erfindung betrifft eine Steckerbaugruppe, insbesondere zur Verwendung in einem Fahrzeug.

Aus der WO 2015/161333 A1 ist eine Steckerbaugruppe bekannt, bei welcher ein erster Mantelabschnitt in einem ersten Bereich verformt wird, um eine formschlüssige Verbindung mit einem Rohr herzustellen, und in einem zweiten Bereich verformt wird, um ein Dichtungselement zwischen dem ersten Mantelabschnitt und dem Rohr zu klemmen.

Eine derartige Steckerbaugruppe bzw. das Verfahren zum Herstellen einer derartigen Steckerbaugruppe weist den Nachteil auf, dass der erste Mantelabschnitt an zwei axial zueinander beabstandeten Stellen verpresst werden muss und daher eine erhöhte Umformkraft notwendig ist.

Aus der US 5 148 836 A, der AT 509 196 B1 und der AT 516 939 A4 sind weitere Steckerbaugruppen bekannt.

Aufgabe der vorliegenden Erfindung war es, die Nachteile des Standes der Technik zu überwinden und eine Steckerbaugruppe, zur Verfügung zu stellen, welche einfach hergestellt werden kann und trotzdem eine gute Dichtwirkung und eine hohe mechanische Haltbarkeit aufweist, sowie ein Verfahren zum Herstellen der Steckerbaugruppe anzugeben.

Diese Aufgabe wird durch eine Vorrichtung und ein Verfahren gemäß den Ansprüchen gelöst.

Erfindungsgemäß ist eine Steckerbaugruppe gemäß dem Anspruch 1.

Die erfindungsgemäße Steckerbaugruppe weist den Vorteil auf, dass durch die Umformung in nur einem kleinen Umformbereich des ersten Mantelabschnittes eine formschlüssige Klemmung des Rohres mit dem Verbinderkörper hergestellt werden kann und darüber hinaus das Rohr zum Verbinderkörper abgedichtet werden kann. Dadurch, dass das Dichtungselement teilweise in den Umformbereich des ersten Mantelabschnittes hineinragt, ist gewährleistet, dass das Dichtungselement zwischen dem ersten Mantelabschnitt und dem Rohr geklemmt wird und dadurch seine Dichtwirkung entfalten kann.

Erfindungsgemäß ist weiters, dass in einem Kontaktbereich der erste Mantelabschnitt zumindest bereichsweise direkt am Rohr anliegt, wobei das Dichtungselement zum Zentrum des Kontaktbereiches in einem Abstand angeordnet ist, welcher so gewählt ist, dass das Dichtungselement zwischen einer zum Kontaktbereich anschließenden ersten Flanke des verformten ersten Mantelabschnittes und dem Rohr geklemmt ist, jedoch nicht in eine zum Kontaktbereich anschließende und der ersten Flanke gegenüberliegende zweite Flanke hineinragt. Von Vorteil ist hierbei, dass im Bereich der zweiten Flanke der erste Mantelabschnitt das Rohr direkt kontaktieren kann, ohne dass das Dichtungselement dazwischen liegt. Durch diesen direkten Kontakt des stabilen ersten Mantelabschnittes mit dem stabilen Rohr kann die formschlüssige Verbindung eine hohe Stabilität aufweisen.

Ferner kann vorgesehen sein, dass im Umformbereich das Rohr und der erste Mantelabschnitt des Verbinderkörpers gemeinsam verformt sind und dadurch die formschlüssige Verbindung zwischen dem Verbinderkörper und dem Rohr realisiert ist. Von Vorteil ist hierbei, dass das Rohr zum Herstellen der formschlüssigen Verbindung nicht vorab bearbeitet werden muss, sondern dass ein Standardrohr verwendet werden kann. Dadurch, dass der erste Mantelabschnitt und das Rohr gemeinsam verformt sind, kann auch erreicht werden, dass die formschlüssige Verbindung eine hohe Stabilität aufweist.

Darüber hinaus kann vorgesehen sein, dass das Rohr im Verbindungsabschnitt eine zumindest teilweise umlaufende Fixierausnehmung aufweist in welche der erste Mantelabschnitt des Verbinderkörpers im verformten Zustand hineinragt und dadurch die formschlüssige Verbindung zwischen dem Verbinderkörper und dem Rohr realisiert ist. Von Vorteil ist hierbei, dass ein Rohr mit einer Fixierausnehmung nicht zwangsweise mit dem ersten Mantelabschnitt verformt werden muss, um eine formschlüssige Verbindung zwischen dem Verbinderkörper und dem Rohr herstellen zu können. Vielmehr kann die Fixierausnehmung als Gegenelement dienen, in welches der erste Mantelabschnitt hinein verformt werden kann.

Vorteilhaft ist auch eine Ausprägung, gemäß welcher vorgesehen sein kann, dass das Rohr aus einem Material gebildet ist, welches eine gute plastische Verformbarkeit aufweist. Von Vorteil ist hierbei, dass diese Maßnahme das Rohr gemeinsam mit dem ersten Mantelabschnitt verformt werden kann.

Gemäß einer Weiterbildung ist es möglich, dass das Rohr aus einem Stahl oder einer Stahllegierung gebildet ist. Von Vorteil ist hierbei, dass ein Stahl bzw. eine Stahllegierung eine gute plastische Umformbarkeit aufweist.

Ferner kann es zweckmäßig sein, wenn das Dichtungselement einen Dichtungshauptkörper aufweist, wobei an der Außenseite des Dichtungshauptkörpers ein Anschlag ausgebildet ist. Von Vorteil ist hierbei, dass der Anschlag am Dichtungselement zur Positionierung des Rohres relativ zum Dichtungselement bzw. zur Positionierung des Rohres relativ zum Verbinderkörper dienen kann.

Darüber hinaus kann vorgesehen sein, dass der Anschlag in Form von zumindest teilweise umlaufenden Stegen ausgebildet ist. Von Vorteil ist hierbei, dass derartige umlaufende Stege einfach herzustellen sind.

Weiters kann vorgesehen sein, dass der zweite Mantelabschnitt an der Rohraufnahmeseite eine Verjüngung aufweist, ein Innendurchmesser der Verjüngung kleiner ist als der Innendurchmesser des Hauptbereiches des zweiten Mantelabschnittes und dass das Rohr in einem Bereich im Ringraum innerhalb der Rohraufnahmeseite verformt ist, sodass die Verjüngung als zusätzliche formschlüssige Verbindung zwischen dem Rohr und dem Verbinderkörper wirkt. Von Vorteil ist hierbei, dass durch die zusätzliche formschlüssige Verbindung zwischen dem Verbinderkörper und dem Rohr die axiale Haltekraft bzw. die Stabilität der Steckerbaugruppe verbessert werden kann.

Darüber hinaus ist ein Verfahren zum Herstellen einer Steckerbaugruppe gemäß dem Anspruch 9 vorgesehen.

Von Vorteil am erfindungsgemäßen Verfahren ist, dass der erste Mantelabschnitt nur in einem Umformbereich verformt werden muss, wodurch das Umformwerkzeug eine weniger komplexe Formgebung aufweisen muss und darüber hinaus die nötigen Umformkräfte reduziert werden können.

Insbesondere kann es vorteilhaft sein, wenn zum Bereitstellen des Verbinderkörpers mit dem im Ringraum aufgenommenen Dichtungselement das Dichtungselement mit einem am Dichtungselement angeordneten Anschlag voran in den Ringraum eingeschoben wird.

Ferner kann vorgesehen sein, dass das Dichtungselement soweit in den Ringraum eingeschoben wird, bis es an einer an den ersten Mantelabschnitt anschließenden Stirnwandung anliegt, wobei die Stirnwandung als Anschlag für das Dichtungselement dient. Von Vorteil ist hierbei, dass durch diese Maßnahme das Dichtungselement im Ringraum positioniert werden kann. Darüber hinaus kann vorgesehen sein, dass beim Einsetzen des Rohres in den Ringraum des Verbinderkörpers das Rohr soweit in den Ringraum eingeschoben wird, bis das Rohr am Anschlag des Dichtungselementes zum Anliegen kommt. Von Vorteil ist hierbei, dass dadurch das Rohr relativ zum Dichtungselement bzw. relativ zum Verbinderkörper positioniert werden kann.

Vorteilhaft ist auch eine Ausprägung, gemäß welcher vorgesehen sein kann, dass das Rohr mit einer vorbestimmten Kraft an das Dichtungselement angedrückt wird, um sicherzustellen, dass das Dichtungselement an der an den ersten Mantelabschnitt anschließenden Stirnwandung anliegt. Dadurch kann insbesondere erreicht werden, dass ein möglicherweise falsch positioniertes Dichtungselement mittels dem Rohr in seine richtige Position verschoben werden kann.

Gemäß einer Weiterbildung ist es möglich, dass der erste Mantelabschnitt des Verbinderkörpers mittels dem Presswerkzeug ausschließlich im Kontaktbereich verformt wird. Von Vorteil ist hierbei, dass dadurch die Komplexität des Presswerkzeuges verringert werden kann. Darüber hinaus kann durch diese Maßnahme auch die nötige Umformkraft möglichst gering gehalten werden.

Zum besseren Verständnis der Erfindung wird diese anhand der nachfolgenden Figuren näher erläutert.

Es zeigen jeweils in stark vereinfachter, schematischer Darstellung:
- Fig. 1: eine perspektivische Darstellung einer Steckerbaugruppe in einem Viertelschnitt;
- Fig. 2: ein mit der Steckerbaugruppe ausgestattetes Fahrzeug;
- Fig. 3: eine Schnittdarstellung der Steckerbaugruppe in einer Explosionsansicht;
- Fig. 4: eine perspektivische Ansicht eines Ausführungsbeispiels eines Dichtungselementes;
- Fig. 5: eine Schnittdarstellung der Einzelkomponenten eines ersten Ausführungsbeispiels der Steckerbaugruppe in einer zusammengesteckten Stellung;
- Fig. 6: eine Schnittdarstellung der Einzelkomponenten des ersten Ausführungsbeispiels der Steckerbaugruppe in einer verpressten Stellung;
- Fig. 7: eine Schnittdarstellung der Einzelkomponenten eines zweiten Ausführungsbeispiels der Steckerbaugruppe in einer zusammengesteckten Stellung.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

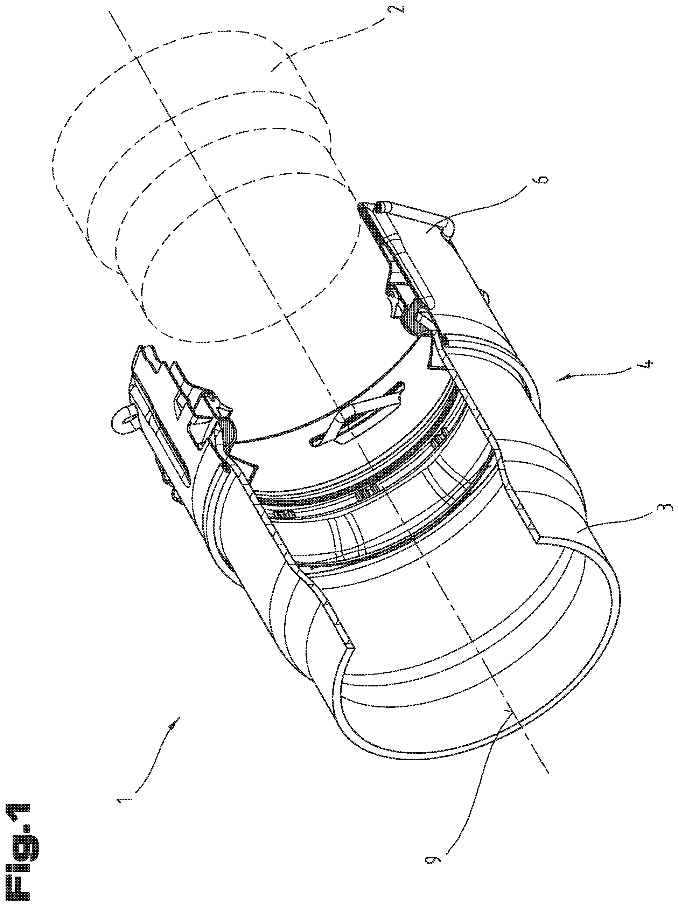

Fig. 1 zeigt eine perspektivische Ansicht einer Steckerbaugruppe 1, wobei diese in einem Viertelschnitt geschnitten dargestellt ist. Weiters ist in Fig. 1 schematisch ein Gegensteckverbinder 2 dargestellt, welcher mit der Steckerbaugruppe 1 verbindbar ist. Das Zusammenwirken zwischen Steckerbaugruppe 1 und dem Gegensteckverbinder 2 ist in der AT 509 196 B1 hinlänglich beschrieben.

In Fig. 1 ist die Steckerbaugruppe 1 in einem zusammengebauten Zustand dargestellt. Die Steckerbaugruppe 1 umfasst ein Rohr 3, einen Steckverbinder 4 sowie ein zwischen Steckverbinder 4 und Rohr 3 eingebrachtes Dichtungselement 5. Der Steckverbinder 4 umfasst einen Verbinderkörper 6, welcher vorzugsweise als einteiliges Umformteil, etwa als Tiefziehteil, insbesondere aus einem Edelstahlblech gebildet ist.

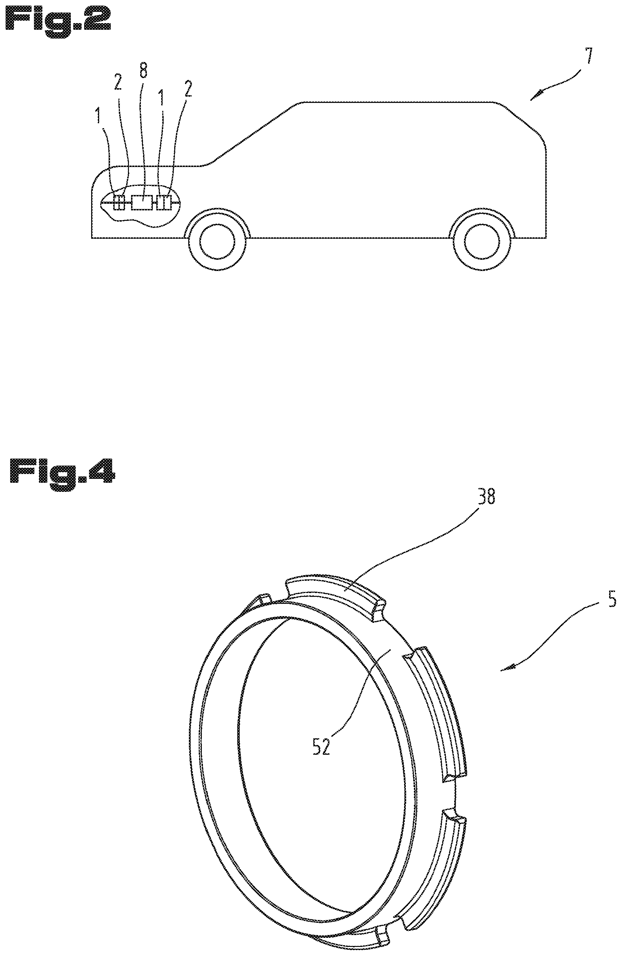

Fig. 2 zeigt eine schematische Darstellung eines Fahrzeuges 7 mit verbauter Steckerbaugruppe 1 entsprechend Fig. 1. Wie in Fig. 2 ersichtlich, wird die Steckerbaugruppe 1 vorzugsweise in einem Fahrzeug 7, insbesondere in einem straßengebundenen Kraftfahrzeug mit Verbrennungsmotor eingesetzt. Im Speziellen wird die Steckerbaugruppe 1 zum Verbinden verschiedener Bauteile der Frischluftzuführung zum Verbrennungsmotor eingesetzt. Beispielsweise kann vorgesehen sein, dass die Steckerbaugruppe 1 mit dem entsprechenden Gegensteckverbinder 2 zur Verbindung zweier Teile im Ansaugbereich eines Turboladers 8 vorgesehen ist. Weiters kann auch vorgesehen sein, dass eine derartige Steckerverbindung in der vom Turbolader 8 abgehenden Druckseite zur Verbindung zweier Bauteile eingesetzt wird.

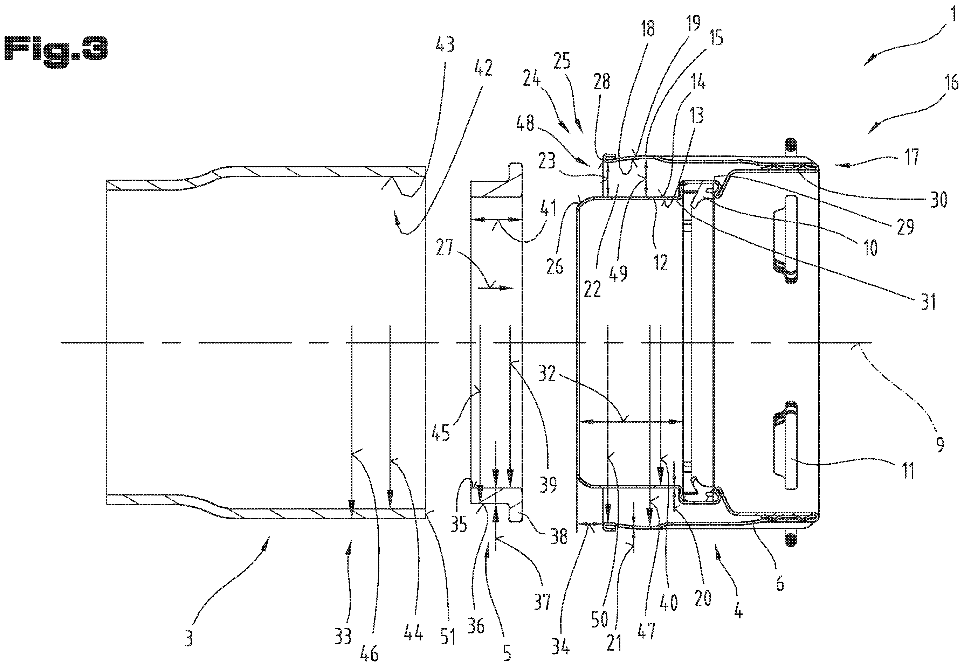

Fig. 3 zeigt einen Längsschnitt durch die Steckerbaugruppe 1 entlang einer zentralen Längsachse 9 des Steckverbinders 4. Um die einzelnen Bauteile gut beschreiben zu können, sind diese in der Fig. 3 in einer Explosionsansicht dargestellt.

Wie in Fig. 3 gut ersichtlich, umfasst der Steckverbinder 4 neben dem Verbinderkörper 6 eine Steckerdichtung 10, welche im Verbinderkörper 6 aufgenommen ist. Die Steckerdichtung 10 dient dazu, um die Steckerbaugruppe 1 im zusammengesteckten Zustand mit einem Gegensteckverbinder 2 ausreichend abdichten zu können.

Weiters umfasst der Steckverbinder 4 ein Federelement 11 durch welche die Steckerbaugruppe 1 in deren Position relativ zum, mit der Steckerbaugruppe 1 zusammengestesteckten, Gegensteckverbinder 2 gesichert werden kann. Das Federelement 11 ist dermaßen konstruiert, dass es leicht aktiviert und deaktiviert werden kann, sodass bedarfsweise die Steckerbaugruppe 1 und der Gegensteckverbinder 2 voneinander getrennt bzw. miteinander verbunden werden können.

Wie in Fig. 3 ersichtlich, ist am Verbinderkörper 6 ein erster Mantelabschnitt 12 ausgebildet, welcher die zentrale Längsachse 9 des Steckverbinders 4 hülsenförmig umgibt. Mit anderen Worten ausgedrückt, ist der erste Mantelabschnitt 12 ein rotationssymmetrischer Hohlzylinder.

Der erste Mantelabschnitt 12 weist eine innenliegende Mantelfläche 13 und eine außenliegende Mantelfläche 14 auf. Den ersten Mantelabschnitt 12 umgibt ein zweiter Mantelabschnitt 15, welcher ebenfalls bezüglich der zentralen Längsachse 9 rotationssymmetrisch ausgebildet ist. Der erste Mantelabschnitt 12 ist mit dem zweiten Mantelabschnitt 15 an einem ersten Endabschnitt 16 mittels eines ersten Stirnwandabschnittes 17 verbunden.

Gleich wie der erste Mantelabschnitt 12 weist auch der zweite Mantelabschnitt 15 eine innenliegende Mantelfläche 18 und eine außenliegende Mantelfläche 19 auf.

Der erste Mantelabschnitt 12 wird durch seine innenliegende Mantelfläche 13 und die außenliegende Mantelfläche 14 begrenzt, wodurch sich eine Wandstärke 20 des ersten Mantelabschnittes 12 ergibt. Der zweite Mantelabschnitt 15 wird ebenfalls durch eine innenliegende Mantelfläche 18 und eine außenliegende Mantelfläche 19 begrenzt, wodurch sich eine Wandstärke 21 des zweiten Mantelabschnittes 15 ergibt.

Durch die Beabstandung der beiden Mantelabschnitte 12, 15 zueinander, ergibt sich ein Ringraum 22. Der Ringraum 22 wird insbesondere in radialer Richtung durch die außenliegende Mantelfläche 14 des ersten Mantelabschnittes 12 und durch die innenliegende Mantelfläche 18 des zweiten Mantelabschnittes 15 begrenzt. Insbesondere ergibt sich dadurch ein Ringraumspalt 23. Dieser Ringraumspalt 23 ist vorzugsweise so groß gewählt, dass das Rohr 3 zumindest teilweise darin aufgenommen werden kann. Im dargestellten Ausführungsbeispiel ist der Ringraumspalt 23 zwischen 2mm und 20mm, insbesondere, zwischen 3mm und 10mm, bevorzugt zwischen 5mm und 7mm groß.

Die beiden Mantelabschnitte 12, 15 sind an einem zweiten Endabschnitt 24 des Steckverbinders 4 offen zueinander, wodurch sich eine Rohraufnahmeseite 25 des Verbinderkörpers 6 ergibt.

Es kann vorgesehen sein, dass der erste Mantelabschnitt 12 eine Abschrägung 26 aufweist, welche an der Rohraufnahmeseite 25 des ersten Mantelabschnittes 12 ausgebildet ist. Eine derartige Abschrägung 26 bringt den Vorteil mit sich, dass das Dichtungselement 5 leicht in Einschieberichtung 27 auf den ersten Mantelabschnitt 12 aufgeschoben werden kann. Darüber hinaus kann auch vorgesehen sein, dass der zweite Mantelabschnitt 15 eine derartige Abschrägung 28 aufweist, sodass auch das Rohr 3 leicht in den Ringraum 22 eingeschoben werden kann.

Die Abschrägungen 26, 28 können beispielsweise durch Umbördelungen mit entsprechenden Radien realisiert werden und werden vorzugsweise während des Tiefziehvorganges ausgeformt.

Weiters kann vorgesehen sein, dass an den ersten Mantelabschnitt 12 in Richtung ersten Endabschnitt 16 des Steckverbinders 4 betrachtet, eine Dichtungsaufnahme 29 anschließt, welche ebenfalls im Verbinderkörper 6 ausgeformt ist. In einer derartigen Dichtungsaufnahme 29 kann eine Steckerdichtung 10 aufgenommen sein. Weiters kann vorgesehen sein, dass an die Dichtungsaufnahme 29 ein dritter Mantelabschnitt 30 anschließt, welcher zur Aufnahme des Gegensteckverbinders 2 dient. An den dritten Mantelabschnitt 30 kann der Stirnwandabschnitt 17 anschließen, welcher den dritten Mantelabschnitt 30 mit dem zweiten Mantelabschnitt 15 verbindet. Durch diesen Aufbau bzw. Zusammenhang ist, wie bereits erwähnt, der erste Mantelabschnitt 12 über den Stirnwandabschnitt 17 mit dem zweiten Mantelabschnitt 15 verbunden.

Bevorzugt wird der Verbinderkörper 6 in einem Tiefziehverfahren hergestellt, wobei sämtliche Wandstärken der Mantelabschnitte des Verbinderkörpers 6 in etwa gleich groß sind.

Wie in der Ansicht in Fig. 3 ersichtlich, kann es auch zweckmäßig sein, dass die Dichtungsaufnahme 29 eine Stirnwandung 31 aufweist, welche an den ersten Mantelabschnitt 12 anschließt. Die Stirnwandung 31 kann ausgehend vom ersten Mantelabschnitt 12 insbesondere in Richtung zum zweiten Mantelabschnitt 15 gebogen sein, wodurch sich eine Aufnahmemulde für die Steckerdichtung 10 ergibt.

Die Ausbildung der Stirnwandung 31 bringt weiters den Vorteil mit sich, dass im Zuge des Zusammenbaus der Steckerbaugruppe 1 das Dichtungselement 5 soweit in Einschieberichtung 27 in den Ringraum 22 eingeschoben werden kann, bis es an der Stirnwandung 31 anliegt. Somit kann die Stirnwandung 31 auch dazu dienen, um den Positioniervorgang des Dichtungselementes 5 zu erleichtern. Mit anderen Worten ausgedrückt, dient die Stirnwand 31 als axialer Positionieranschlag für das Dichtungselement 5.

Eine axiale Erstreckung 32 des ersten Mantelabschnittes 12 wird vorzugsweise so groß gewählt, dass der Ringraum 22 eine ausreichende Länge aufweist, um das Dichtungselement 5 und einen am Rohr 3 ausgebildeten Verbindungsabschnitt 33 aufzunehmen.

Weiters kann vorgesehen sein, dass sich der erste Mantelabschnitt 12 weiter in Richtung Rohraufnahmeseite 25 erstreckt als der zweite Mantelabschnitt 15 und somit in einem gewissen Abstand 34 gegenüber dem zweiten Mantelabschnitt 15 in axialer Richtung gesehen vorsteht.

Auch das Dichtungselement 5 kann als rotationssymmetrischer Körper ausgebildet sein, wobei ein im Wesentlichen rechteckiger Querschnitt um die zentrale Längsachse 9 rotationssymmetrisch ausgebildet ist. Dadurch ergibt sich am Dichtungselement 5 eine Innenmantelfläche 35 und eine Außenmantelfläche 36, welche in einem gewissen Abstand zueinander angeordnet sind, wodurch sich eine Wandstärke 37 des Dichtungselementes 5 ergibt. Die Wandstärke 37 des Dichtungselementes 5 wird vorzugsweise so groß gewählt, dass das Dichtungselement 5, welches vorzugsweise aus einem weichelastischen Material gebildet ist, leicht verformt werden kann. Bevorzugt wird eine Wandstärke 37 zwischen 1mm und 10mm, insbesondere zwischen 2mm und 5mm gewählt, um ein Dichtungselement 5 zu erhalten, welches seine Funktion bestmöglich erfüllen kann.

Weiters kann vorgesehen sein, dass das Dichtungselement einen Anschlag 38 aufweist, welcher gegenüber der Außenmantelfläche 36 des rechteckigen Querschnittes vorragt und zur Positionierung des Rohres 3 dienen kann.

Ein Innendurchmesser 39 des Dichtungselementes 5 ist in etwa so groß gewählt, wie ein Außendurchmesser 40 des ersten Mantelabschnittes 12. Von Vorteil ist es, wenn die beiden Durchmesser 39, 40 so aufeinander abgestimmt sind, dass das Dichtungselement 5 leicht auf den ersten Mantelabschnitt 12 aufgeschoben werden kann und dort guten Halt findet. Im dargestellten Ausführungsbeispiel beträgt der Innendurchmesser 39 des Dichtungselementes 5 in etwa 62mm.

Eine Breite 41 des Dichtungselementes 5 kann vorzugsweise so gewählt werden, dass diese etwa zwischen 200 % und 500 % der Dicke 37 des Dichtungselementes 5 beträgt. Durch diese Ausgestaltung des Dichtungselementes 5 kann erreicht werden, dass dieses im verbauten Zustand in der Steckerbaugruppe 1 seine Wirkung bestmöglich entfalten kann.

Weiters weist das Rohr 3 einen Dichtungsbereich 42 auf, welcher im zusammengebauten Zustand der Steckerbaugruppe 1 mit dem Dichtungselement 5 zusammenwirkt. Insbesondere kann vorgesehen sein, dass im zusammengebauten Zustand der Steckerbaugruppe 1 die Außenmantelfläche 36 des Dichtungselementes 5 an einer Innenmantelfläche 43 der Dichtungsbereich 42 anliegt. Die genauen Mechanismen zur Abdichtung zwischen dem Rohr 3 und dem Verbinderkörper 6 werden in weiterer Folge noch näher beschrieben.

Um das Rohr 3 über das Dichtungselement 5 schieben zu können ist vorgesehen, dass ein Innendurchmesser 44 der Dichtungsbereich 42 größer ist als ein Außendurchmesser 45 des Dichtungselementes 5. Vorzugsweise werden die beiden Durchmesser 44, 45 so gewählt, dass das Rohr 3 während des Zusammenbauvorganges der Steckerbaugruppe 1 leicht über das Dichtungselement 5 geschoben werden kann.

Ein Außendurchmesser 46 des Rohres 3 wird vorzugsweise so gewählt, dass er kleiner ist als ein Innendurchmesser 47 des zweiten Mantelabschnittes 15 des Verbinderkörpers 6. Dadurch kann das Rohr 3 während des Zusammenbaus der Steckerbaugruppe 1 leicht in den Ringraum 22 des Verbinderkörpers 6 eingeschoben werden.

Weiters kann vorgesehen sein, dass der zweite Mantelabschnitt 15 des Verbinderkörpers 6 an der Rohraufnahmeseite 25 eine Verjüngung 48 aufweist. Durch die Verjüngung 48 kann im verbauten Zustand der Steckerbaugruppe 1 die formschlüssige Verbindung zwischen dem Rohr 3 und dem Verbinderkörper 6 verbessert werden.

Durch die Ausbildung der Verjüngung 48 ist der Ringraumspalt 23 an der Rohraufnahmeseite 25 kleiner als eine lichte Hauptweite 49 des Ringraumes 22.

Weiters kann vorgesehen sein, dass die Verjüngung 48 einen sich kontinuierlich verändernden Querschnitt aufweist und daher konisch ausgebildet ist. Eine derartig ausgebildete Verjüngung 48 kann fertigungstechnisch einfach hergestellt werden. Weiters ist es auch denkbar, dass die Verjüngung 48 bogenförmig ausgebildet ist. In wieder einer anderen Variante ist es auch denkbar, dass die Verjüngung 48 durch eine Abstufung gebildet ist.

Für die Funktionalität der Verjüngung 48 ist jedoch nicht deren Form maßgebend, sondern ist einzig und alleine erforderlich, dass ein Innendurchmesser 50 der Verjüngung 48 kleiner ist als der Innendurchmesser 47 des Hauptbereiches des zweiten Mantelabschnittes 15.

Der Außendurchmesser 46 des Rohres 3 wird vorzugsweise so groß gewählt, dass er kleiner ist als der Innendurchmesser 50 des zweiten Mantelabschnittes 15 im Bereich der Verjüngung 48. Dadurch kann das Rohr 3 während des Zusammenbaus der Steckerbaugruppe 1 leicht in den Ringraum 22 des Verbinderkörpers 6 eingeschoben werden.

In der Fig. 4 ist ein Ausführungsbeispiel des Dichtungselementes 5 in einer perspektivischen Ansicht dargestellt. Wie aus Fig. 4 ersichtlich, kann vorgesehen sein, dass der Anschlag 38 in Form von einzelnen Segmenten ausgebildet ist, welche am Umfang verteilt an einem Dichtungshauptkörper 52 angeordnet sind.

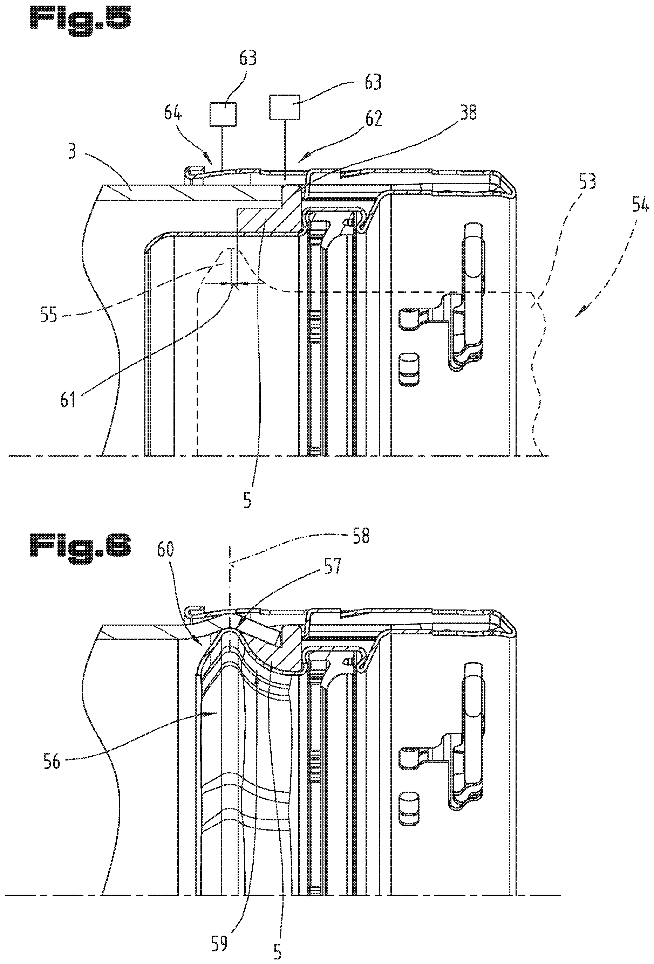

Ein Zusammenbau der Steckerbaugruppe 1 wird im Folgenden anhand der Darstellung in den Figuren 5 und 6 beschrieben.

In einem ersten Verfahrensschritt wird das Dichtungselement 5 in den Ringraum 22 eingesetzt. Hierbei kann das Dichtungselement 5 im Ringraum 22 soweit in Einschieberichtung 27 verschoben werden, bis es an der Stirnwandung 31 der Dichtungsaufnahme 29 anliegt. Insbesondere kann vorgesehen sein, dass der Steckverbinder 4 mit dem darin eingesetzten Dichtungselement 5 in einem ersten Werk bereitgestellt bzw. erstellt wird und diese zwischengelagert bzw. zu weiteren Werken transportiert werden.

In einem weiteren Verfahrensschritt kann optional die richtige Lage des Dichtungselementes 5 im Verbinderkörper 6 kontrolliert werden. Ist das Dichtungselement 5 richtig im Verbinderkörper 6 positioniert, so kann nun in einem weiteren Verfahrensschritt das Rohr 3 in Einschieberichtung 27 in den Ringraum 22 eingeschoben werden.

Vorzugsweise wird das Rohr 3 soweit in den Ringraum 22 eingeschoben, bis eine Stirnfläche 51 des Rohres 3 am Anschlag 38 des Dichtungselementes 5 anliegt. Dadurch ist auch die axiale Position des Rohres 3 relativ zum Verbinderkörper 6 festgelegt.

In der Ansicht nach Fig. 5 sind das Dichtungselement 5 und das Rohr 3 in der zusammengesteckten Position dargestellt, in welcher sie in den Ringraum 22 des Verbinderkörpers 6 geschoben sind. In der Fig. 5 werden für gleiche Teile gleiche Bezugszeichen bzw. Bauteilbezeichnungen wie in der Fig. 3 verwendet. Um unnötige Wiederholungen zu vermeiden, wird auf die detaillierte Beschreibung der Fig. 3 hingewiesen bzw. Bezug genommen.

Wie in Fig. 5 ersichtlich, liegt im zusammengesteckten Zustand der Steckerbaugruppe 1 das Dichtungselement 5 an der Stirnwandung 31 der Dichtungsaufnahme 29 an. Weiters liegt die Stirnfläche 51 des Rohres 3 am Anschlag 38 des Dichtungselementes 5 an. Dadurch ist sowohl die Position des Dichtungselementes 5 relativ zum Verbinderkörper 6 als auch die Position des Rohres 3 relativ zum Dichtungselement 5 und relativ zum Verbinderkörper 6 festgelegt.

Um die einzelnen Bauteile zueinander zu fixieren, kann vorgesehen sein, dass in einem weiteren Verfahrensschritt zur Herstellung der Steckerbaugruppe 1 die erste Mantelfläche 12 verpresst wird, sodass eine formschlüssige Verbindung zwischen der ersten Mantelfläche 12 und dem Rohr 3 hergestellt wird.

In der Fig. 5 ist schematisch ein Presswerkzeug 53 einer Pressmaschine 54 dargestellt, welches zum Verformen der ersten Mantelfläche 12 und somit zum Herstellen einer formschlüssigen Verbindung zwischen dem Verbinderkörper 6 und dem Rohr 3 dient. Wie aus Fig. 5 ersichtlich, kann das Presswerkzeug 53 eine Pressnase 55 aufweisen, welche zum Umformen der ersten Mantelfläche 12 dient.

Fig. 6 zeigt eine weitere Schnittdarstellung der Steckerbaugruppe 1 entsprechend der Darstellungen in den Figuren 3 und 5. In der Fig. 6 werden für gleiche Teile gleiche Bezugszeichen bzw. Bauteilbezeichnungen wie in der vorangegangenen Figuren 3 und 5 verwendet. Um unnötige Wiederholungen zu vermeiden, wird auf die detaillierte Beschreibung der vorangegangenen Figuren 3 und 5 hingewiesen bzw. Bezug genommen.

In der Schnittdarstellung in Fig. 6 ist die Steckerbaugruppe 1 in einem verpressten Zustand dargestellt. Wie in Fig. 6 ersichtlich, ist der erste Mantelabschnitt 12 an einem Umformbereich 56 so verformt, dass eine formschlüssige Verbindung zwischen dem ersten Mantelabschnitt 12 und dem Rohr 3 hergestellt ist. Im vorliegenden Ausführungsbeispiel nach Fig. 6 ist die formschlüssige Verbindung zwischen dem ersten Mantelabschnitt 12 und dem Rohr 3 dadurch realisiert, dass der erste Mantelabschnitt 12 im Umformbereich 56 durch das Presswerkzeug 53 soweit verformt bzw. nach außen gedrückt wird, bis der erste Mantelabschnitt 12 am Rohr 3 zum Anliegen kommt und das Rohr 3 im Umformbereich 56 ebenfalls verformt wird. Das Rohr 3 kann soweit nach außen verformt sein, bis es am zweiten Mantelabschnitt 15 anliegt. Mit andern Worten ausgedrückt kann das Rohr 3 zwischen dem verformten ersten Mantelabschnitt 12 und dem zweiten Mantelabschnitt 15 geklemmt sein.

Dabei ist vorgesehen, dass das Dichtungselement 5 zumindest teilweise in den Umformbereich 56 des ersten Mantelabschnittes 12 hineinragt, sodass das Dichtungselement 5 bereichsweise zwischen dem ersten Mantelabschnitt 12 und dem Rohr 3 geklemmt ist.

Der Umformbereich 56 weist einen Kontaktbereich 57 auf, an welchem die Umformung ein maximalmaß aufweist. Im Zentrum 58 des Kontaktbereiches 57 ist der erste Mantelabschnitt 12 daher am weitesten zum zweiten Mantelabschnitt 15 verformt. Weiters sind eine erste Flanke 59 und eine zweite Flanke 60 ausgebildet, welche an den Kontaktbereich 57 anschließen. Die beiden Flanken 59, 60 bilden den Übergang zwischen dem Kontaktbereich 57 und dem nicht oder nur geringfügig verformten Teil des ersten Mantelabschnittes 12.

Als erste Flanke 59 wird jene Flanke bezeichnet, welche dem ersten Endabschnitt 16 des Verbinderkörpers 6 näherliegend angeordnet ist. Als zweite Flanke 60 wird jene Flanke bezeichnet, welche dem zweiten Endabschnitt 24 des Verbinderkörpers 6 näherliegend angeordnet ist.

Wie aus Fig. 6 weiter ersichtlich, kann vorgesehen sein, dass das Zentrum 58 des Kontaktbereiches 57 an einer Position zwischen der Verjüngung 48 und der Stirnwandung 31 gewählt wird, sodass die Verjüngung 48 einen zusätzlichen Formschluss zwischen dem Rohr 3 und dem zweiten Mantelabschnitt 15 bewirkt.

Im vorliegenden Ausführungsbeispiel ist der Umformbereich 56 bzw. das Dichtungselement 5 derart gestaltet, dass das Dichtungselement 5 im Bereich der ersten Flanke 59 zwischen dem ersten Mantelabschnitt 12 und dem Rohr 3 geklemmt ist, jedoch nicht in den Bereich der zweiten Flanke 60 hineinragt. Insbesondere kann hierbei vorgesehen sein, dass das Dichtungselement 5 zum Zentrum 58 des Kontaktbereiches 57 in einem Abstand 61 angeordnet ist, welcher so gewählt ist, dass das Dichtungselement 5 zwischen der zum Kontaktbereich 57 anschließenden ersten Flanke 59 des verformten ersten Mantelabschnittes 12 und dem Rohr 3 geklemmt ist, jedoch nicht in eine zum Kontaktbereich 57 anschließende und der ersten Flanke 59 gegenüberliegende zweite Flanke 60 hineinragt.

In einer weiteren, nicht dargestellten Ausführungsvariante kann auch vorgesehen sein, dass das Dichtungselement 5 sowohl zwischen der ersten Flanke 59 des verformten ersten Mantelabschnittes 12 und dem Rohr 3, als auch zwischen der zweiten Flanke 60 des verformten ersten Mantelabschnittes 12 und dem Rohr 3 geklemmt ist.

Insbesondere ist die Innenmantelfläche 35 des Dichtungselementes 5 an die außenliegende Mantelfläche 14 des ersten Mantelabschnittes 12 gepresst, sodass diese dicht an dicht aneinander anliegen. Weiters ist die Außenmantelfläche 36 des Dichtungselementes 5 an die Innenmantelfläche 43 der Dichtungsaufnahme 42 im Rohr 3 gepresst, sodass auch diese Flächen dicht an dicht aneinander anliegen. Durch diese Klemmung des Dichtungselementes 5 wird erreicht, dass das Rohr 3 gegenüber dem Steckverbinder 4 ausreichend abgedichtet werden kann, um ein Ausströmen eines unter Druck stehenden Gases zu verhindern.

Wie aus Fig. 5 weiters ersichtlich, kann vorgesehen sein, dass im zweiten Mantelabschnitt 15 eine erste Fensteröffnung 62 ausgebildet ist, durch welche hindurch mittels einer Messvorrichtung 63 die korrekte Lage des Dichtungselementes 5 kontrolliert werden kann. Weiters kann eine zweite Fensteröffnung 64 vorgesehen sein, durch welche hindurch mittels einer Messvorrichtung 63 der Umformgrad des Rohres 3 kontrolliert werden kann. Die Messvorrichtung 63 zur Kontrolle der korrekten Lage des Dichtungselementes 5 und die Messvorrichtung 63 zur Kontrolle des Umformgrades des Rohres 3 können in Form von unterschiedlichen Vorrichtungen ausgebildet sein. Es kann jedoch auch vorgesehen sein, dass für beide Verfahrensschritte dieselbe Messvorrichtung 63 verwendet wird.

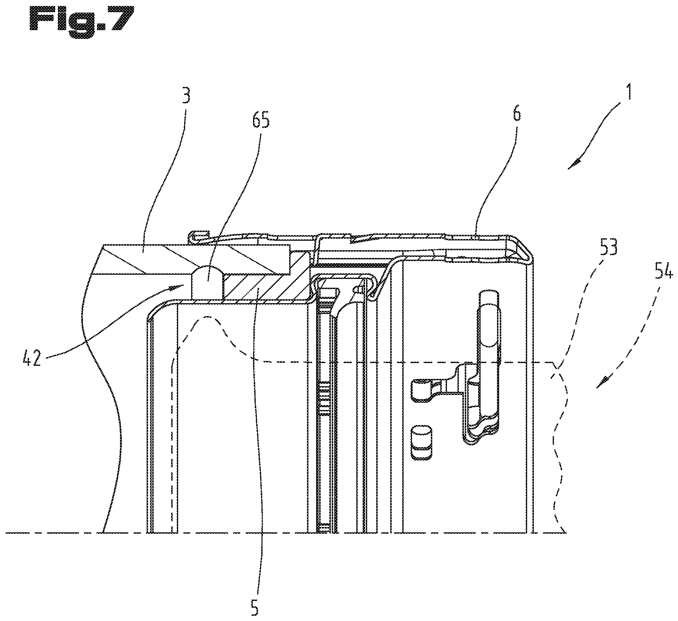

In der Fig. 7 ist eine weitere und gegebenenfalls für sich eigenständige Ausführungsform der Steckerbaugruppe 1 gezeigt, wobei wiederum für gleiche Teile gleiche Bezugszeichen bzw. Bauteilbezeichnungen wie in den vorangegangenen Figuren 1 bis 6 verwendet werden. Um unnötige Wiederholungen zu vermeiden, wird auf die detaillierte Beschreibung in den vorangegangenen Figuren 1 bis 6 hingewiesen bzw. Bezug genommen.

Wie aus der Fig. 7 ersichtlich, kann vorgesehen sein, dass der Verbindungsabschnitt 33 des Rohres 3 im Dichtungsbereich 42 eine Fixierausnehmung 65 aufweist.

Bei einer derartigen Ausgestaltung des Rohres 3 kann der erste Mantelabschnitt 12 in die Fixierausnehmung 65 hinein verformt werden, um die formschlüssige Verbindung zu erstellen. Das Rohr 3 kann daher dadurch im Verbinderkörper 6 gehalten werden, dass der Umformbereich 56 des ersten Mantelabschnittes 12 mit der Fixierausnehmung 65 des Rohres 3 korrespondiert.

Bei einer derartigen Ausführungsvariante braucht das Rohr 3 nicht gezwungenermaßen verformbar gestaltet sein, da keine Umformung des Rohres 3 zum Erstellen des Formschlusses notwendig ist. Das Rohr 3 kann beispielsweise aus einem Kunststoffmaterial sein, welches keine guten plastischen Verformeigenschaften aufweist.

Die Fixierausnehmung 65 ist vorzugsweise als eine im Querschnitt halbrunde Nut ausgebildet, welche in den Dichtungsbereich 42 des Rohres 3 eingebracht ist. Gemäß einer ersten Ausführungsvariante kann vorgesehen sein, dass die Nut als umlaufende Nut ausgebildet ist.

Gemäß einer weiteren Ausführungsvariante kann vorgesehen sein, dass die Fixierausnehmung 65 über den Umfang betrachtet segmentiert ist und somit Zwischenstege aufweist, welche die Fixierausnehmung 65 unterbrechen.

In einer weiteren Ausführungsvariante kann das Rohr 3 die Fixierausnehmung 65 aufweisen und zusätzlich plastisch verformbar sein.

Die Ausführungsbeispiele zeigen mögliche Ausführungsvarianten, wobei an dieser Stelle bemerkt sei, dass die Erfindung nicht auf die speziell dargestellten Ausführungsvarianten derselben eingeschränkt ist, sondern vielmehr auch diverse Kombinationen der einzelnen Ausführungsvarianten untereinander möglich sind und diese Variationsmöglichkeit aufgrund der Lehre zum technischen Handeln durch gegenständliche Erfindung im Können des auf diesem technischen Gebiet tätigen Fachmannes liegt.

Der Schutzbereich ist durch die Ansprüche bestimmt. Die Beschreibung und die Zeichnungen sind jedoch zur Auslegung der Ansprüche heranzuziehen. Einzelmerkmale oder Merkmalskombinationen aus den gezeigten und beschriebenen unterschiedlichen Ausführungsbeispielen können für sich eigenständige erfinderische Lösungen darstellen. Die den eigenständigen erfinderischen Lösungen zugrundeliegende Aufgabe kann der Beschreibung entnommen werden.

Sämtliche Angaben zu Wertebereichen in gegenständlicher Beschreibung sind so zu verstehen, dass diese beliebige und alle Teilbereiche daraus mitumfassen, z.B. ist die Angabe 1 bis 10 so zu verstehen, dass sämtliche Teilbereiche, ausgehend von der unteren Grenze 1 und der oberen Grenze 10 mit umfasst sind, d.h. sämtliche Teilbereiche beginnen mit einer unteren Grenze von 1 oder größer und enden bei einer oberen Grenze von 10 oder weniger, z.B. 1 bis 1,7, oder 3,2 bis 8,1, oder 5,5 bis 10.

Der Ordnung halber sei abschließend darauf hingewiesen, dass zum besseren Verständnis des Aufbaus Elemente teilweise unmaßstäblich und/oder vergrößert und/oder verkleinert dargestellt wurden.

**Bezugszeichenaufstellung**

| | | | |
|---|---|---|---|
| 1 | Steckerbaugruppe | 29 | Dichtungsaufnahme Steckverbinder |
| 2 | Gegensteckverbinder | | |
| 3 | Rohr | 30 | Dritter Mantelabschnitt |
| 4 | Steckverbinder | 31 | Stirnwandung Dichtungsaufnahme |
| 5 | Dichtungselement | 32 | Axiale Erstreckung erster Mantelabschnitt |
| 6 | Verbinderkörper | | |
| 7 | Fahrzeug | 33 | Verbindungsabschnitt |
| 8 | Turbolader | 34 | Abstand |
| 9 | Längsachse des Steckverbinders | 35 | Innenmantelfläche Dichtungselement |
| 10 | Steckerdichtung | | |
| 11 | Federelement | 36 | Außenmantelfläche Dichtungselement |
| 12 | erster Mantelabschnitt | | |
| 13 | innenliegende Mantelfläche | 37 | Wandstärke Dichtungselement |
| 14 | außenliegende Mantelfläche | 38 | Anschlag |
| 15 | zweiter Mantelabschnitt | 39 | Innendurchmesser Dichtungselement |
| 16 | erster Endabschnitt Steckverbinder | | |
| 17 | Stirnwandabschnitt | 40 | Außendurchmesser erster Mantelabschnitt |
| 18 | innenliegende Mantelfläche | | |
| 19 | außenliegende Mantelfläche | 41 | Breite Dichtungselement |
| 20 | Wandstärke erster Mantelabschnitt | 42 | Dichtungsbereich Rohr |
| 21 | Wandstärke zweiter Mantelabschnitt | 43 | Innenmantelfläche Dichtungsaufnahme |
| 22 | Ringraum | 44 | Innendurchmesser Dichtungsaufnahme |
| 23 | Ringraumspalt | | |
| 24 | zweiter Endabschnitt Steckverbinder | 45 | Außendurchmesser Dichtungselement |
| 25 | Rohraufnahmeseite | 46 | Außendurchmesser Rohr |
| 26 | Abschrägung | 47 | Innendurchmesser zweiter Mantelabschnitt |
| 27 | Einschieberichtung | | |
| 28 | Abschrägung | 48 | Verjüngung |
| 49 | Hauptweite Ringraum | | |
| 50 | Innendurchmesser Verjüngung | | |
| 51 | Stirnfläche Rohr | | |
| 52 | Dichtungshauptkörper | | |
| 53 | Presswerkzeug | | |
| 54 | Pressmaschine | | |
| 55 | Pressnase | | |
| 56 | Umformbereich | | |
| 57 | Kontaktbereich | | |
| 58 | Zentrum | | |
| 59 | erste Flanke | | |
| 60 | zweite Flanke | | |
| 61 | Abstand | | |
| 62 | erste Fensteröffnung | | |
| 63 | Messvorrichtung | | |
| 64 | zweite Fensteröffnung | | |
| 65 | Fixierausnehmung | | |

## Patentansprüche

1. Steckerbaugruppe (1), insbesondere zur Verwendung in einem Fahrzeug, umfassend ein Rohr (3), ein Dichtungselement (5) und einen Steckverbinder (4), welcher einen Verbinderkörper (6) umfasst, wobei der Verbinderkörper (6) einen Ringraum (22) aufweist, der zwischen einem hülsenförmigen, im Querschnitt eine zentrale Längsachse (9) des Steckverbinders (4) ringförmig umgebenden ersten Mantelabschnitt (12) und einem hülsenförmigen, im Querschnitt die zentrale Längsachse (9) ringförmig umgebenden zweiten Mantelabschnitt (15) des Steckverbinders (4) liegt, wobei der erste Mantelabschnitt (12) vom zweiten Mantelabschnitt (15) umgeben ist und der erste Mantelabschnitt (12) des Verbinderkörpers (6) mit dem zweiten Mantelabschnitt (15) an einem ersten Endabschnitt (16) durch einen ersten Stirnwandabschnitt (17) verbunden ist und die Mantelabschnitte (12, 15) an einem zweiten Endabschnitt (24) offen zueinander sind, wodurch eine Rohraufnahmeseite (25) des Verbinderkörpers (6) ausgebildet ist, wobei ein Verbindungsabschnitt (33) des Rohres (3) von der Rohraufnahmeseite (25) her in den Ringraum (22) des Verbinderkörpers (6) eingesetzt ist und das Dichtungselement (5) zwischen dem ersten Mantelabschnitt (12) und dem Verbindungsabschnitt (33) des Rohres (3) angeordnet ist, wobei der erste Mantelabschnitt (12) des Verbinderkörpers (6) derart verformt ist, dass eine formschlüssige Verbindung zwischen einem Umformbereich (56) des ersten Mantelabschnittes (12) des Verbinderkörpers (6) und dem Rohr (3) hergestellt ist, wobei das Dichtungselement (5) zumindest teilweise in den Umformbereich (56) des ersten Mantelabschnittes (12) hineinragt, sodass das Dichtungselement (5) zumindest bereichsweise zwischen dem ersten Mantelabschnitt (12) und dem Rohr (3) geklemmt ist, wobei in einem Kontaktbereich (57) der erste Mantelabschnitt (12) zumindest bereichsweise direkt am Rohr (3) anliegt, **dadurch gekennzeichnet, dass** das Dichtungselement (5) zum Zentrum (58) des Kontaktbereiches (57) in einem Abstand (61) angeordnet ist, welcher so gewählt ist, dass das Dichtungselement (5) zwischen einer zum Kontaktbereich (57) anschließenden ersten Flanke (59) des verformten ersten Mantelabschnittes (12) und dem Rohr (3) geklemmt ist, jedoch nicht in eine zum Kontaktbereich (57) anschließende und der ersten Flanke (59) gegenüberliegende zweite Flanke (60) hineinragt.

2. Steckerbaugruppe nach Anspruch 1, **dadurch gekennzeichnet, dass** im Umformbereich (56) das Rohr (3) und der erste Mantelabschnitt (12) des Verbinderkörpers (6) gemeinsam verformt sind und dadurch die formschlüssige Verbindung zwischen dem Verbinderkörper (6) und dem Rohr (3) realisiert ist.

3. Steckerbaugruppe nach einem der vorhergehenden Ansprüche, **dadurch gekennzeichnet, dass** das Rohr (3) im Verbindungsabschnitt (33) eine zumindest teilweise umlaufende Fixierausnehmung (65) aufweist in welche der erste Mantelabschnitt (12) des Verbinderkörpers (6) im verformten Zustand hineinragt und dadurch die formschlüssige Verbindung zwischen dem Verbinderkörper (6) und dem Rohr (3) realisiert ist.

4. Steckerbaugruppe nach einem der vorhergehenden Ansprüche, **dadurch gekennzeichnet, dass** das Rohr (3) aus einem Material gebildet ist, welches eine gute plastische Verformbarkeit aufweist.

5. Steckerbaugruppe nach einem der vorhergehenden Ansprüche, **dadurch gekennzeichnet, dass** das Rohr (3) aus einem Metall, insbesondere Stahl oder einer Stahllegierung, gebildet ist.

6. Steckerbaugruppe nach einem der vorhergehenden Ansprüche, **dadurch gekennzeichnet, dass** das Dichtungselement (5) einen Dichtungshauptkörper (52) aufweist, wobei an der Außenseite des Dichtungshauptkörpers (52) ein Anschlag (38) ausgebildet ist.

7. Steckerbaugruppe nach Anspruch 6, **dadurch gekennzeichnet, dass** der Anschlag (38) in Form von zumindest teilweise umlaufenden Stegen ausgebildet ist.

8. Steckerbaugruppe nach einem der vorhergehenden Ansprüche, **dadurch gekennzeichnet, dass** der zweite Mantelabschnitt (15) an der Rohraufnahmeseite (25) eine Verjüngung (48) aufweist, ein Innendurchmesser (50) der Verjüngung (48) kleiner ist als der Innendurchmesser (47) des Hauptbereiches des zweiten Mantelabschnittes (15) und dass das Rohr (3) in einem Bereich im Ringraum (22) innerhalb der Rohraufnahmeseite (25) verformt ist, sodass die Verjüngung (48) als zusätzliche formschlüssige Verbindung zwischen dem Rohr (3) und dem Verbinderkörper (6) wirkt.

9. Verfahren zum Herstellen einer Steckerbaugruppe (1), insbesondere einer Steckerbaugruppe (1) nach einem der vorhergehenden Ansprüche, wobei die Steckerbaugruppe (1) ein Rohr (3), ein Dichtungselement (5) und einen Steckverbinder (4) umfasst, wobei der Steckverbinder (4) einen Verbinderkörper (6) umfasst, wobei der Verbinderkörper (6) einen Ringraum (22) aufweist, der zwischen einem hülsenförmigen, im Querschnitt eine zentrale Längsachse (9) des Steckverbinders (4) ringförmig umgebenden ersten Mantelabschnitt (12) und einem hülsenförmigen, im Querschnitt die zentrale Längsachse (9) ringförmig umgebenden zweiten Mantelabschnitt (15) des Steckverbinders (4) liegt, wobei der erste Mantelabschnitt (12) vom zweiten Mantelabschnitt (15) umgeben ist und der erste Mantelabschnitt (12) des Verbinderkörpers (6) mit dem zweiten Mantelabschnitt (15) an einem ersten Endabschnitt (16) durch einen ersten Stirnwandabschnitt (17) verbunden ist und die Mantelabschnitte (12, 15) an einem zweiten Endabschnitt (24) offen zueinander sind, wodurch eine Rohraufnahmeseite (25) des Verbinderkörpers (6) ausgebildet ist, wobei das Verfahren folgende Verfahrensschritte umfasst:
- Bereitstellen des Verbinderkörpers (6) mit dem im Ringraum (22) aufgenommenen Dichtungselement (5);
- Bereitstellen des Rohres (3);
- Einsetzen des Rohres (3) von der Rohraufnahmeseite (25) her in den Ringraum (22) des Verbinderkörpers (6), wobei das Rohr (3) derart in den Ringraum (22) eingesetzt wird, dass das Dichtungselement (5) zwischen dem ersten Mantelabschnitt (12) und dem Verbindungsabschnitt (33) des Rohres (3) angeordnet ist;
- Verformen des ersten Mantelabschnittes (12) des Verbinderkörpers (6) mittels einem Presswerkzeug (53), wobei der erste Mantelabschnitt (12) des Verbinderkörpers (6) derart verformt wird, dass eine formschlüssige Verbindung zwischen einem Umformbereich (56) des ersten Mantelabschnittes (12) des Verbinderkörpers (6) und dem Rohr (3) hergestellt ist, wobei das Dichtungselement (5) zumindest teilweise in den Umformbereich (56) des ersten Mantelabschnittes (12) hineinragt, sodass das Dichtungselement (5) zumindest bereichsweise zwischen dem ersten Mantelabschnitt (12) und dem Rohr (3) geklemmt ist,
wobei der erste Mantelabschnitt (12) derart verformt wird, dass in einem Kontaktbereich (57) der erste Mantelabschnitt (12) zumindest bereichsweise direkt am Rohr (3) anliegt, **dadurch gekennzeichnet, dass** das Dichtungselement (5) zum Zentrum (58) des Kontaktbereiches (57) in einem Abstand (61) angeordnet ist, welcher so gewählt ist, dass das Dichtungselement (5) zwischen einer zum Kontaktbereich (57) anschließenden ersten Flanke (59) des verformten ersten Mantelabschnittes (12) und dem Rohr (3) geklemmt ist, jedoch nicht in eine zum Kontaktbereich (57) anschließende und der ersten Flanke (59) gegenüberliegende zweite Flanke (60) hineinragt.

10. Verfahren nach Anspruch 9, **dadurch gekennzeichnet, dass** zum Bereitstellen des Verbinderkörpers (6) mit dem im Ringraum (22) aufgenommenen Dichtungselement (5) das Dichtungselement (5) mit einem am Dichtungselement (5) angeordneten Anschlag (38) voran in den Ringraum (22) eingeschoben wird.

11. Verfahren nach Anspruch 10, **dadurch gekennzeichnet, dass** das Dichtungselement (5) soweit in den Ringraum (22) eingeschoben wird, bis es an einer an den ersten Mantelabschnitt (12) anschließenden Stirnwandung (31) anliegt, wobei die Stirnwandung (31) als Anschlag für das Dichtungselement (5) dient.

12. Verfahren nach Anspruch 10 oder 11, **dadurch gekennzeichnet, dass** beim Einsetzen des Rohres (3) in den Ringraum (22) des Verbinderkörpers (6) das Rohr (3) soweit in den Ringraum (22) eingeschoben wird, bis das Rohr (3) am Anschlag (38) des Dichtungselementes (5) zum Anliegen kommt.

13. Verfahren nach Anspruch 12, **dadurch gekennzeichnet, dass** das Rohr (3) mit einer vorbestimmten Kraft an das Dichtungselement (5) angedrückt wird, um sicherzustellen, dass das Dichtungselement (5) an der an den ersten Mantelabschnitt (12) anschließenden Stirnwandung (31) anliegt.

14. Verfahren nach einem der Ansprüche 9 bis 13, **dadurch gekennzeichnet, dass** der erste Mantelabschnitt (12) des Verbinderkörpers (6) mittels dem Presswerkzeug (53) ausschließlich im Kontaktbereich (57) verformt wird.

## Claims

1. A plug assembly (1), in particular for use in a vehicle, comprising a tube (3), a sealing element (5) and a plug connector (4), which comprises a connector body (6), wherein the connector body (6) comprises an annulus (22) located between a sleeve-shaped first casing section (12) annularly surrounding a central longitudinal axis (9) of the plug connector (4) in cross section and a sleeve-shaped second casing section (15) of the plug connector (4) annularly surrounding the central longitudinal axis (9), wherein the first casing section (12) is surrounded by the second casing section (15) and the first casing section (12) of the connector body (6) is connected to the second casing section (15) on a first end section (16) by a first front wall section (17) and the casing sections (12, 15) are open to one another on a second end section (24), thereby forming a tube receiving side (25) of the connector body (6), wherein a connection section (33) of the tube (3) is introduced into the annulus (22) of the connector body (6) from the tube receiving side (25) and the sealing element (5) is arranged between the first casing section (12) and the connection section (33) of the tube (3), wherein the first casing section (12) of the connector body (6) is deformed in such a way that an interlocking connection is established between a shaping region (56) of the first casing section (12) of the connector body (6) and the tube (3), wherein the sealing element (5) protrudes at least partially into the shaping region (56) of the first casing section (12), such that the sealing element (5) is clamped at least sectionally between the first casing section (12) and the tube (3), wherein the first casing section (12) directly rests on the tube (3) at least sectionally in a contact region (57), **characterized in that** the sealing element (5) is arranged at a distance (61) to the center (58) of the contact region (57), said distance (61) being selected such that the sealing element (5) is clamped between a first flank (59) of the deformed first casing section (12) adjoining the contact region (57) and the tube (3), however, does not protrude into a second flank (60) adjoining the contact region (57) and opposing the first flank (59).

2. The plug assembly according to claim 1, **characterized in that** in the shaping region (56), the tube (3) and the first casing section (12) of the connector body (6) are deformed together and the interlocking connection between the connector body (6) and the tube (3) is thereby realized.

3. The plug assembly according to one of the preceding claims, **characterized in that** the tube (3) in the connection section (33) comprises an at least partially circumferential fixing recess (65) into which the first casing section (12) of the connector body (6) protrudes in the deformed state and the interlocking connection between the connector body (6) and the tube (3) is thereby realized.

4. The plug assembly according to one of the preceding claims, **characterized in that** the tube (3) is formed from a material having a good plastic deformability.

5. The plug assembly according to one of the preceding claims, **characterized in that** the tube (3) is formed from a metal, in particular steel or a steel alloy.

6. The plug assembly according to one of the preceding claims, **characterized in that** the sealing element (5) comprises a seal main body (52), wherein a stop (38) is formed on the outer side of the seal main body (52).

7. The plug assembly according to claim 6, **characterized in that** the stop (38) is provided in the form of at least partially circumferential webs.

8. The plug assembly according to one of the preceding claims, **characterized in that** the second casing section (15) comprises a taper (48) on the tube receiving side (25), that an inner diameter (50) of the taper (48) is smaller than the inner diameter (47) of the main region of the second casing section (15) and that the tube (3) is deformed in a region in the annulus (22) within the tube receiving side (25), such that the taper (48) has the effect of an additional interlocking connection between the tube (3) and the connector body (6).

9. A method for producing a plug as sembly (1), in particular a plug as sembly (1) according to one of the preceding claims, wherein the plug assembly (1) comprises a tube (3), a sealing element (5) and a plug connector (4), wherein the plug connector (4) comprises a connector body (6), wherein the connector body (6) comprises an annulus (22) located between a sleeve-shaped first casing section (12) annularly surrounding a central longitudinal axis (9) of the plug connector (4) in cross section and a sleeve-shaped second casing section (15) of the plug connector (4) annularly surrounding the central longitudinal axis (9), wherein the first casing section (12) is surrounded by the second casing section (15) and the first casing section (12) of the connector body (6) is connected to the second casing section (15) on a first end section (16) by a first front wall section (17) and the casing sections (12, 15) are open to one another on a second end section (24), thereby forming a tube receiving side (25) of the connector body (6), wherein the method comprises the following method steps:
- providing the connector body (6) with the sealing element (5) accommodated in the annulus (22);
- providing the tube (3);
- inserting the tube (3) into the annulus (22) of the connector body (6) from the tube receiving side (25), wherein the tube (3) is inserted into the annulus (22) such that the sealing element (5) is arranged between the first casing section (12) and the connection section (33) of the tube (3);
- deforming the first casing section (12) of the connector body (6) by means of a pressing tool (53), wherein the first casing section (12) of the connector body (6) is deformed such that an interlocking connection is established between a shaping region (56) of the first casing section (12) of the connector body (6) and the tube (3), wherein the sealing element (5) at least partially protrudes into the shaping region (56) of the first casing section (12), such that the sealing element (5) is clamped at least sectionally between the first casing section (12) and the tube (3),
wherein the first casing section (12) is deformed such that the first casing section (12) directly rests on the tube (3) at least sectionally in a contact region (57), **characterized in that** the sealing element (5) is arranged at a distance (61) to the center (58) of the contact region (57), said distance (61) being selected such that the sealing element (5) is clamped between a first flank (59) of the deformed first casing section (12) adjoining the contact region (57) and the tube (3), however, does not protrude into a second flank (60) adjoining the contact region (57) and opposing the first flank (59).

10. The method according to claim 9, **characterized in that** for providing the connector body (6) with the sealing element (5) accommodated in the annulus (22), the sealing element (5) is slid into the annulus (22) with a stop (38) arranged on the sealing element (5) ahead.

11. The method according to claim 10, **characterized in that** the sealing element (5) is inserted into the annulus (22) until it rests on a front wall (31) adjoining the first casing section (12), wherein the front wall (31) serves as a stop for the sealing element (5).

12. The method according to claim 10 or 11, **characterized in that** when the tube (3) is inserted into the annulus (22) of the connector body (6), the tube (3) is inserted into the annulus (22) until the tube (3) comes to rest on the stop (38) of the sealing element (5).

13. The method according to claim 12, **characterized in that** the tube (3) is pressed against the sealing element (5) with a predetermined force so as to ensure that the sealing element (5) rests on the front wall (31) adjoining the first casing section (12).

14. The method according to one of claims 9 to 13, **characterized in that** the first casing section (12) of the connector body (6) is deformed merely in the contact region (57) by means of the pressing tool (53).

## Revendications

1. Sous-ensemble de connecteur (1), plus particulièrement destiné à être utilisé dans un véhicule, comprenant un tube (3), un élément d'étanchéité (5) et un connecteur (4), qui comprend un corps de connecteur (6), dans lequel le corps de connecteur (6) comprend un espace annulaire (22), qui se trouve entre une première portion d'enveloppe (12) en forme de douille, entourant de manière annulaire en coupe transversale un axe longitudinal central (9) du connecteur (4) et une deuxième portion d'enveloppe (15) du connecteur (4), en forme de douille, entourant de manière annulaire en coupe transversale l'axe longitudinal central (9), dans lequel la première portion d'enveloppe (12) est entourée par la deuxième portion d'enveloppe (15) et la première portion d'enveloppe (12) du corps de connecteur (6) est reliée avec la deuxième portion d'enveloppe (15) au niveau d'une première portion d'extrémité (16) à l'aide d'une première portion de paroi frontale (17) et les portions d'enveloppe (12, 15) sont ouvertes l'une par rapport à l'autre au niveau d'une deuxième portion d'extrémité (24), ce qui forme un côté de logement de tube (25) du corps de connecteur (6), dans lequel une portion de liaison (33) du tube (3) est inséré du côté de logement de tube (25) dans l'espace annulaire (22) du corps de connecteur (6) et l'élément d'étanchéité (5) est disposé entre la première portion d'enveloppe (12) et la portion de liaison (33) du tube (3), dans lequel la première portion d'enveloppe (12) du corps de connecteur (6) est déformée de façon à ce qu'une liaison par complémentarité de forme soit établie entre une zone de formage (56) de la première portion d'enveloppe (12) du corps de connecteur (6) et le tube (3), dans lequel l'élément d'étanchéité (5) dépasse au moins partiellement dans la zone de formage (56) de la première portion d'enveloppe (12), de façon à ce que l'élément d'étanchéité (5) soit serré au moins à certains endroits entre la première portion d'enveloppe (12) et le tube (3), dans lequel, dans une zone de contact (57), la première portion d'enveloppe (12) s'appuie au moins à certains endroits directement contre le tube (3), **caractérisé en ce que** l'élément d'étanchéité (5) est disposé à une distance (61) du centre (58) de la zone de contact (57) qui est choisie de façon à ce que l'élément d'étanchéité (5) soit serrée entre un premier flanc (59) de la première portion d'enveloppe (12) déformée suivant la zone de contact (57) et le tube (3), mais ne dépasse pas dans un deuxième flanc (60) suivant la zone de contact (57) et opposé au premier flanc (59).

2. Sous-ensemble de connecteur selon la revendication 1, **caractérisé en ce que**, dans la zone de formage (56), le tube (3) et la première portion d'enveloppe (12) du corps de connecteur (6) sont déformés conjointement et la liaison par complémentarité de forme est réalisée entre le corps de connecteur (6) et le tube (3).

3. Sous-ensemble de connecteur selon l'une des revendications précédentes, **caractérisé en ce que** le tube (3) comprend, dans la portion de liaison (33) un évidement de fixation (65) au moins partiellement circulaire, dans lequel la première portion d'enveloppe (12) du corps de connecteur (6) dépasse dans l'état déformé et la liaison par complémentarité de forme entre le corps de connecteur (6) et le tube (3) est ainsi réalisée.

4. Sous-ensemble de connecteur selon l'une des revendications précédentes, **caractérisé en ce que** le tube (3) est constitué d'un matériau qui présente une bonne déformabilité plastique.

5. Sous-ensemble de connecteur selon l'une des revendications précédentes, **caractérisé en ce que** le tube (3) est constitué d'un métal, plus particulièrement de l'acier ou un alliage à base d'acier.

6. Sous-ensemble de connecteur selon l'une des revendications précédentes, **caractérisé en ce que** l'élément d'étanchéité (5) comprend un corps principal d'étanchéité (52), dans lequel, sur la face externe du corps principal d'étanchéité (52), est réalisée une butée (38).

7. Sous-ensemble de connecteur selon la revendication 6, **caractérisé en ce que** la butée (38) se présente sous la forme de nervures au moins partiellement circulaires.

8. Sous-ensemble de connecteur selon l'une des revendications précédentes, **caractérisé en ce que** la deuxième portion d'enveloppe (15) comprend, sur le côté de logement de tube (25), un rétrécissement (48), un diamètre intérieur (50) du rétrécissement (48) étant inférieur au diamètre intérieur (47) de la zone principale de la deuxième portion d'enveloppe (15) et **en ce que** le tube (3) est déformé dans une zone de l'espace annulaire (22) à l'intérieur du côté de logement de tube (25), de façon à ce que le rétrécissement (48) agisse comme une liaison par complémentarité de forme supplémentaire entre le tube (3) et le corps de connecteur (6).

9. Procédé de fabrication d'un sous-ensemble de connecteur (1), plus particulièrement d'un sous-ensemble de connecteur (1) selon l'une des revendications précédentes, dans lequel le sous-ensemble de connecteur (1) comprend un tube (3), un élément d'étanchéité (5) et un connecteur (4), dans lequel le connecteur (4) comprend un corps de connecteur (6), dans lequel le corps de connecteur (6) comprend un espace annulaire (22) qui se trouve entre une première portion d'enveloppe (12) en forme de douille, entourant de manière annulaire en section transversale un axe longitudinal central (9) du connecteur (4) et une deuxième portion d'enveloppe (15) du connecteur (4), entourant de manière annulaire en section transversale l'axe longitudinal central (9), dans lequel la première portion d'enveloppe (12) est entourée par la deuxième portion d'enveloppe (15) et la première portion d'enveloppe (12) du corps de connecteur (6) est reliée avec la deuxième portion d'enveloppe (15) au niveau d'une première portion d'extrémité (16) à l'aide d'une première portion de paroi frontale (17) et les portions d'enveloppe (12, 15) sont ouvertes l'une par rapport à l'autre au niveau d'une deuxième portion d'extrémité (24), ce qui permet de former un côté de logement de tube (25) du corps de connecteur (6), dans lequel le procédé comprend les étapes suivantes :
- préparation du corps de connecteur (6) avec l'élément d'étanchéité (5) logé dans l'espace annulaire (22) ;
- préparation du tube (3) ;
- insertion du tube (3) du côté de logement de tube (25) vers l'espace annulaire (22) du corps de connecteur (6), dans lequel le tube (3) est inséré dans l'espace annulaire (22) de façon à ce que l'élément d'étanchéité (5) soit disposé entre la première portion d'enveloppe (12) et la portion de liaison (33) du tube (3) ;
- déformation de la première portion d'enveloppe (12) du corps de connecteur (6) au moyen d'un outil de pressage (53), dans lequel la première portion d'enveloppe (12) du corps de connecteur (6) est déformée de façon à établir une liaison par complémentarité de forme entre une zone de formage (56) de la première portion d'enveloppe (12) du corps de connecteur (6) et le tube (3), dans lequel l'élément d'étanchéité (5) dépasse au moins partiellement dans la zone de formage (56) de la première portion d'enveloppe (12), de façon à ce que l'élément d'étanchéité (5) soit serré au moins à certains endroits entre la première portion d'enveloppe (12) et le tube (3),
dans lequel la première portion d'enveloppe (12) est déformée de façon à ce que, dans une zone de contact (57), la première portion d'enveloppe (12) s'appuie au moins à certains endroits directement contre le tube (3), **caractérisé en ce que** l'élément d'étanchéité (5) est disposé à une distance (61) du centre (58) de la zone de contact (57) qui est choisie de façon à ce que l'élément d'étanchéité (5) soit serré entre un premier flanc (59) de la première portion d'enveloppe (12) déformée suivant la zone de contact (57) et le tube (3), mais ne dépasse pas dans un deuxième flanc (60) suivant la zone de contact (57) et opposé au premier flanc (59).

10. Procédé selon la revendication 9, **caractérisé en ce que**, pour la préparation du corps de connecteur (6) avec l'élément d'étanchéité (5) logé dans l'espace annulaire (22), l'élément d'étanchéité (5) est poussé en avant dans l'espace annulaire (22) avec une butée (38) disposée sur l'élément d'étanchéité (5).

11. Procédé selon la revendication 10, **caractérisé en ce que** l'élément d'étanchéité (5) est poussé dans l'espace annulaire (22) jusqu'à ce qu'il s'appuie contre une paroi frontale (31) suivant la première portion d'enveloppe (12), dans lequel la paroi frontale (31) sert de butée pour l'élément d'étanchéité (5).

12. Procédé selon la revendication 10 ou 11, **caractérisé en ce que**, lors de l'insertion du tube (3) dans l'espace annulaire (22) du corps de connecteur (6), le tube (3) est poussé dans l'espace annulaire (22) jusqu'à ce que le tube (3) arrive en appui contre la butée (38) de l'élément d'étanchéité (5).

13. Procédé selon la revendication 12, **caractérisé en ce que** le tube (3) soit comprimé avec une force prédéterminée contre l'élément d'étanchéité (5), afin de garantir que l'élément d'étanchéité (5) s'appuie contre la paroi frontale (31) suivant la première portion d'enveloppe (12).

14. Procédé selon l'une des revendications 9 à 13, **caractérisé en ce que** la première portion d'enveloppe (12) du corps de connecteur (6) est déformée au moyen de l'outil de pressage (53) exclusivement dans la zone de contact (57).
